# FASCICULE DE BREVET EUROPEEN

(11) **EP 2 669 902 B1**
(45) Date de publication et mention de la délivrance du brevet: **18.07.2018**
(21) Numéro de dépôt: 13170308.4
(22) Date de dépôt: 03.06.2013
(51) Int. Cl.: H01B 7/36, G06Q 50/06

(54) **Procédé de traçabilité de câbles de communication ou d'énergie**
Verfahren zur Rückverfolgung von Funkkabeln oder Stromkabeln
Method for tracing communication or power cables

(30) Priorité: 01.06.2012 FR 1255102
(43) Date de publication de la demande: 04.12.2013
(73) Titulaire: ACOME, Société Coopérative et Participative, Société Anonyme coopérative de production à capital variable, 75014 Paris (FR)
(72) Inventeur: Fargues, Jean-Yves, 92190 Meudon (FR); Jaillet, Jacques, 92390 Villeneuve La Garenne (FR); Lallinec, Patrice, 50610 Jullouville (FR); Rossier, Philippe, 50220 Le Mesnil-Ozenne (FR)
(74) Mandataire: Regimbeau

(56) Documents cités:
- WO-A1-2011/024144
- WO-A1-2011/085452
- GB-A- 275 250
- GB-A- 290 770
- GB-A- 331 714
- GR-A- 20090 100 489
- US-A1- 2012 042 978
- US-A1- 2012 081 228
- DATABASE WPI Week 201167 Thomson Scientific, London, GB; AN 2010-J59619 XP002691642, & ZA 200 905 638 A (HOLOMATRIX PTY LTD) 30 juin 2010 (2010-06-30)

## Description

### DOMAINE DE L'INVENTION

La présente invention est relative à un procédé de traçabilité de câbles de communication ou d'énergie.

### ETAT DE LA TECHNIQUE

On sait que les câbles électriques à conducteurs métalliques font de plus en plus l'objet de vol ou de vandalisme.

C'est le cas notamment pour les câbles utilisés dans les réseaux de communication, d'énergie, de transport ou autre déployés en France le long des voies ferrées ou le long des axes routiers par exemple.

C'est aussi le cas des chantiers ou des parcs de stockage qui peuvent faire l'objet de vandalisme et de vol de câble.

Il peut arriver qu'à la suite d'un vol, des portions de câble - le cas échéant fortement détériorées et dépossédées de leur composants métalliques (cuivre, aluminium, alliages métalliques) - soient retrouvées.

Il est évidemment alors souhaitable de pouvoir identifier les portions de câbles ainsi retrouvées et d'être capables de faire le rapprochement avec les zones géographiques dont elles proviennent.

Les câbles actuels ne permettent pas cette identification, et ce encore moins lorsque le câble a subi une destruction par le feu tendant à faire disparaitre toute trace des marquages qu'il pouvait intégrer.

Par ailleurs, les opérateurs qui exploitent des réseaux de transport d'énergie ou de communication souhaiteraient pouvoir identifier et localiser précisément les différentes portions de câbles qui constituent ces réseaux, afin notamment de faciliter leur maintenance.

Le document US 2012/081228 décrit un procédé pour marquer et tracer des articles, en particulier des articles en cuivre, tels que des fils de cuivre.

Le document GR 2009/0100489 décrit une application chargeable dans la mémoire d'un terminale programmable, l'application étant propre à commander le terminal pour que le terminal exécute automatiquement des étapes.

### RESUME DE L'INVENTION

À cet effet, l'invention propose un procédé de traçabilité de câbles de communication ou d'énergie, caractérisé en ce que lors de la fabrication du câble, on introduit dans celui-ci un support de marquage, ledit support portant, réparti régulièrement dans la longueur du câble, un marquage portant des informations dont une partie d'identification est répétée dans ladite longueur du câble et dont une autre partie itérative est différente pour chaque zone de marquage et permet l'identification de ladite zone, et en ce que lors d'une installation d'une portion de câble dans un réseau, on relève sur ce support des informations relatives à la partie itérative, ainsi que des informations relatives à la partie d'identification aux voisinages des extrémités de ladite portion et on mémorise ces informations dans une base de données répertoriant les différentes portions de câble du réseau en les associant à leur position physique dans celui-ci, ladite base de données étant interrogée ultérieurement à partir des informations de marquage lues sur les supports, pour retrouver la position physique d'affectation dans le réseau de la portion de câble.

Ainsi, en cas de tronçonnage, déplacement d'une portion de câble, le cas échéant altération par le feu, il est possible lorsque la portion de câble est ultérieurement retrouvée, de retrouver la zone géographique dont elle provient.

Le procédé permet également de localiser précisément les différentes portions de câbles qui constituent le réseau, ce qui facilite notamment la maintenance du réseau.

Dans une mise en oeuvre du procédé, la position physique d'affectation comprend les coordonnées géographiques de la portion de câble.

Dans une mise en oeuvre du procédé, le support est un support métallique sur lequel est gravé ou imprimé un marquage comportant une partie itérative et une partie d'identification.

Dans une autre mise en oeuvre du procédé, le support est un support non métallique sur lequel est gravé ou imprimé un marquage comportant une partie itérative et une partie d'identification.

De préférence, chaque zone de marquage est identifiée par une combinaison unique constituée de la partie itérative et de la partie d'identification, de sorte que chaque combinaison identifie de manière univoque une portion de câble.

Une partie du marquage peut être un code-barre adapté pour être lu par lecture optique, la lecture d'informations portées par le support se faisant au moyen d'un lecteur optique.

Une partie du marquage peut être un code barre 2D, tel qu'un code datamatrix, ou de type QR Code.

Dans une mise en oeuvre du procédé, les marquages sont répartis dans la longueur du câble avec une périodicité de l'ordre de la dizaine de centimètres ou du mètre ou encore de quelques mètres.

Dans une mise en oeuvre du procédé, lors de l'installation de la portion de câble dans le réseau, les informations de marquage figurant sur le support de marquage sont relevées au moyen d'un dispositif de prise d'image et des coordonnées géographiques de la portion de câble sont relevées au moyen d'un dispositif de localisation, les coordonnées géographiques étant associées aux informations de marquage.

De plus, les informations de marquage relevées sur le support et les coordonnées géographiques associées peuvent être transmises par un terminal mobile vers la base de données en vue de leur enregistrement,

Pour retrouver la position physique d'affectation dans le réseau d'une portion de câble, les informations de marquage figurant sur le support de marquage peuvent être relevées au moyen d'un dispositif de prise d'image, les informations de marquage relevées étant comparées avec les informations de marquage enregistrées dans la base de données, et la position physique d'affectation d'origine dans le réseau de la portion de câble étant déterminée en fonction de cette comparaison.

En particulier, les informations de marquage relevées sur le support peuvent être transmises par un terminal mobile vers la base de données, le terminal mobile recevant des données relatives à la position physique d'affectation dans le réseau de la portion de câble, et affichant les données reçues sur un écran du terminal mobile.

L'invention concerne également une application chargeable dans la mémoire d'un terminal programmable, l'application étant propre à commander le terminal pour que le terminal exécute automatiquement des étapes de :
- recevoir des données de marquage en provenance d'un lecteur optique, les données de marquage reçues étant représentatives d'un marquage figurant sur un support de marquage d'un câble d'un réseau de communication ou d'énergie,
- commander un dispositif de localisation pour mesurer une position géographique du terminal, et
- transmettre les données de marquage et la position géographique vers un serveur distant pour enregistrement dans une base de données répertoriant les différentes portions de câble du réseau en les associant à leur position physique dans celui-ci.

L'invention concerne également une application pour terminal mobile du type comprenant un dispositif de prise d'image et un écran d'affichage, l'application étant propre à commander le terminal mobile pour qu'il exécute automatiquement des étapes de :
- commander le dispositif de prise d'image pour générer une image d'un marquage figurant sur un support de marquage d'une portion de câble de communication ou d'énergie d'un réseau,
- extraire de l'image générée des données contenues dans le marquage,
- transmettre les données extraites de l'image vers un serveur distant, le serveur étant propre, à partir des données contenues dans le marquage, à retrouver dans une base de données une position physique de la portion de câble dans le réseau,
- recevoir de la part du serveur distant des informations concernant la position géographique de la portion de câble dans le réseau, et
- afficher sur l'écran les informations concernant la position physique de la portion de câble dans le réseau.

L'invention concerne en outre un câble pour réseau de communication ou d'énergie, caractérisé en ce que, pour la mise en oeuvre du procédé tel que défini précédemment, il intègre un support de marquage, ledit support portant, réparti régulièrement dans la longueur du câble, un marquage portant des informations dont une partie est répétée dans ladite longueur du câble et dont une autre partie itérative est différente pour chaque zone de marquage et permet l'identification de ladite zone.

Le câble peut en outre présenter les caractéristiques suivantes :
- le support est un ruban métallique, tel qu'un ruban en acier inoxydable,
- le ruban est en matériau non métallique type mica, céramique, polymère ou papier,
- le ruban est disposé dans le câble soit dans la gaine du câble, soit dans le faisceau de conducteurs ou en périphérie des conducteurs.

Enfin, l'invention se rapporte à une base de données dans laquelle est enregistré un fichier de traçabilité, le fichier de traçabilité comprenant d'une part des données de marquage correspondant à un marquage figurant sur un support de marquage incorporé dans une portion de câble d'un réseau de communication ou d'énergie, et d'autre part des données de localisation identifiant une position géographique de la portion de câble dans le réseau de communication ou d'énergie, les données de localisation de la portion de câble étant associées aux données de marquage de la portion de câble dans le fichier de traçabilité.

### PRESENTATION DES DESSINS

D'autres caractéristiques et avantages de l'invention ressortiront encore de la description qui suit, laquelle est purement illustrative et non limitative et doit être lue en regard des dessins annexés sur lesquels :
- les figures 1 et 2 illustrent un exemple de câble selon l'invention ;
- la figure 3 est une représentation schématique illustrant un mode de mise en oeuvre possible pour le procédé selon l'invention ;
- la figure 4 représente de manière schématique un support de marquage destiné à être inséré dans un câble ;
- les figures 5 à 8 illustrent de manière schématique des étapes d'un procédé de traçabilité conforme à un mode de mise en oeuvre de l'invention.

### DESCRIPTION DETAILLEE D'UN MODE DE REALISATION

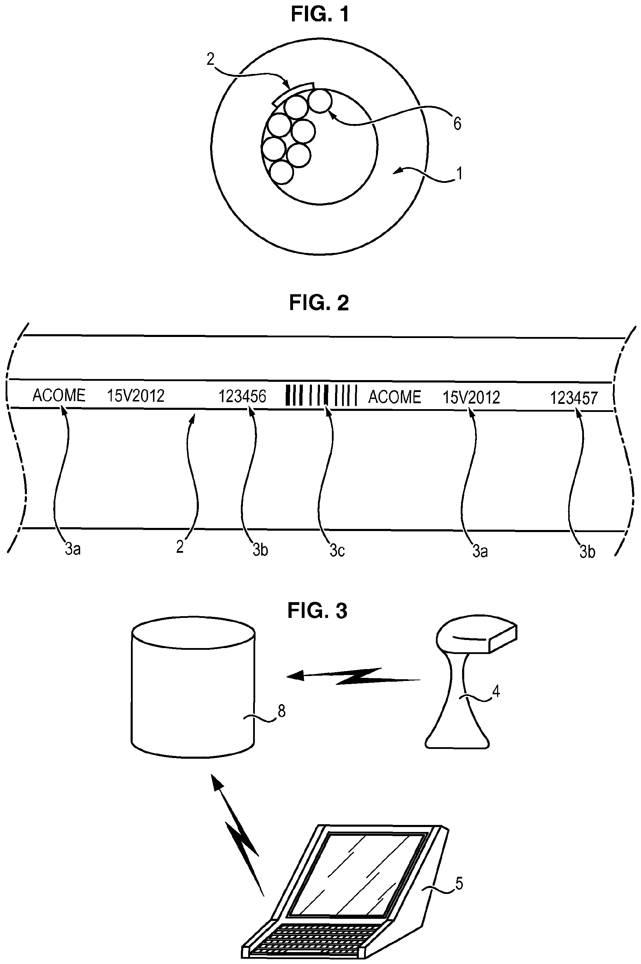

Le câble de la figure 1 est un câble à éléments conducteurs 6 dont la gaine 1 intègre un support 2 en un matériau résistant à haute température, qui porte un double marquage 3.

Ce support 2 et son marquage 3 sont conçus pour résister à des températures de 800°C ou supérieures pendant des durées nécessaires à la combustion des composants inflammables du câble.

Notamment, le support 2 peut être un ruban métallique, par exemple en acier inoxydable, tout autre type d'acier ou de métal étant néanmoins envisageable. Il est possible d'utiliser d'autres matériaux non métalliques comme le mica ou les céramiques. Il présente par exemple une largeur de 5 millimètres et une épaisseur de 0,25 millimètres. Dans l'exemple illustré sur les figures 1 et 2, ce ruban 2 est en l'occurrence disposé en long sur le faisceau de conducteurs du câble, c'est-à-dire interposé entre le faisceau de conducteurs et la gaine du câble.

Le double marquage 3 qu'il porte est constitué :
- d'une part d'un marquage 3a se répétant dans la longueur du câble, et
- d'autre part, d'un marquage itératif 3b d'identification des différents points associé au marquage 3a dans la longueur du câble, ce deuxième marquage 3b permettant, lorsqu'il est lu, d'identifier la zone de la longueur du câble à laquelle correspond le tronçon que l'on examine.

Le support que constitue le ruban 2 est à cet effet gravé, par exemple par poinçonnage, percussion, perforation, gravure laser.

Le marquage 3a est par exemple constitué d'indications de type identification du fabricant, du propriétaire, identification du lot de fabrication, date de fabrication, nature du produit, identification d'une base de données.

Le marquage 3b est par exemple répété avec une périodicité de l'ordre de la dizaine de centimètres ou du mètre ou encore de quelques mètres.

Le marquage d'identification 3b peut correspondre à une numérotation incrémentée à chaque marquage successif dans la longueur du câble.

La longueur de la répétition des marquages pourra être définie par rapport à la longueur de dénudage nécessaire à la préparation des extrémités du câble pour les opérations de raccordement, de sorte que le marquage y soit rendu visible.

Dans l'exemple de la figure 2, ces marquages sont de type alphanumérique. Un code barre 3c (code barre 2D, tel qu'un code datamatrix, ou de type QR Code) est également porté sur le ruban 2 au même endroit dans lequel l'ensemble de ces informations sont reprises.

Le support 2 est intégré au câble lors des opérations de fabrication.

Il peut être disposé dans le faisceau de conducteurs, ou en périphérie des conducteurs ou dans la gaine.

Du côté des fabricants, il peut être prévu que les marquages sur le support de marquage - et notamment la partie d'identification de celui-ci - renvoient à des données qui sont relatives aux caractéristiques du câble ou du lot de câble fabriqué qui sont par exemple stockées dans une base de données. Ces informations sont susceptibles d'être facilement retrouvées par interrogation de cette base dès lors que l'on dispose des données d'identification correspondant au marquage itératif ainsi qu'au marquage individuel.

De plus, chaque zone de marquage est identifiée par une combinaison unique partie itérative 3a + partie d'identification 3b et par un code barre 3c unique. Autrement dit, lors de la fabrication des support de marquage, un code barre 3c n'est attribué qu'une seule fois. De cette manière, chaque combinaison 3a + 3b ou (chaque code barre 3c) identifie de manière univoque une seule portion d'un seul câble.

À la cession d'une longueur de câble à un client, ces données sont transmises au client qui a connaissance à la fois de l'ensemble des marquages uniques contenus dans la portion de câble qu'il détient, et des caractéristiques associées à cette portion.

Lors de la pose et de l'installation du câble dans un réseau, le client identifie la portion de câble qu'il utilise par lecture des marquages aux deux extrémités de la portion de câble.

Comme l'illustre la figure 3, cette lecture peut se faire au moyen d'un lecteur optique 4 ou encore visuellement.

Ces informations d'identification sont entrées dans une base de données 8 propre au client où elles sont associées au positionnement physique du câble dans le réseau, qui comprend les coordonnées géographiques des portions de câble, en même temps qu'aux différentes informations propres au câble qui ont pu être transmises par le fabricant.

Par la suite, si cette portion de câble devait être tronçonnée et volée puis retrouvée ultérieurement, il sera possible de l'identifier par une lecture de son marquage, et ce même en cas de vandalisme et de destruction par le feu.

En interrogeant la base de données 8 à partir d'un terminal 5 auquel des données de marquage lue sur le support 2 retrouvé auront été transmises, il sera alors possible d'associer aux éléments qui ont pu être retrouvés le positionnement physique initial de la portion de câble dans le réseau.

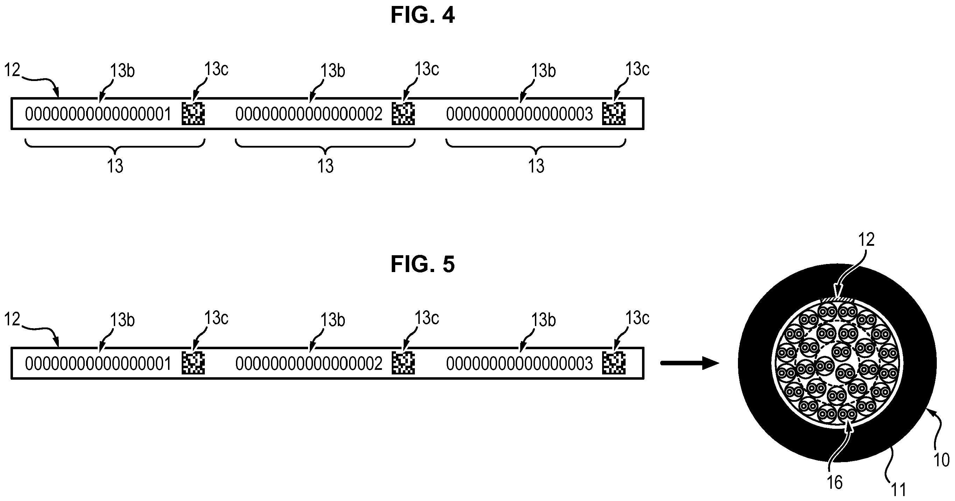

La figure 4 représente de manière schématique un support de marquage 12 destiné à être inséré dans un câble.

Le support de marquage 12 est un ruban qui porte un double marquage 13.

Le double marquage 13 qu'il porte est constitué :
- d'une part d'un marquage itératif 13b ce marquage itératif 13b permettant, lorsqu'il est lu, d'identifier la zone de la longueur du câble à laquelle correspond le tronçon que l'on examine, et
- d'autre part d'un marquage 13c portant des informations dont une partie est répétée dans la longueur du câble et dont une autre partie est itérative.

Le support que constitue le ruban 12 est à cet effet gravé, par exemple par poinçonnage, percussion, perforation, gravure laser ou impression.

Le marquage itératif 13b est de type alphanumérique. Ce marquage 13b comprend un numéro positionné sur le ruban à intervalle constant entre deux numéros successifs (par exemple à intervalle de 1 mètre). Le numéro est incrémenté à chaque marquage successif dans la longueur du câble.

Le marquage 13c est par exemple sous la forme d'un code Datamatrix (c'est-à-dire d'un code barre en deux dimensions). Le code comprend une zone qui est répétée dans la longueur du câble et une zone itérative. La zone répétée est constituée d'indications de type identification du fabricant, du propriétaire, identification du lot de fabrication, date de fabrication, nature du produit, identification de la base de données. La zone itérative reprend le marquage itératif 13b.

Chaque code 13c n'est attribué qu'une seule fois de sorte que le code 13c identifie de manière univoque une seule portion d'un seul câble.

Dans le cas où le support de marquage 12 est destiné à être utilisé comme anti-vol, le support 12 et son marquage 13 sont réalisés en un matériau résistant à des températures de 800°C ou supérieures pendant des durées nécessaires à la combustion des composants inflammables du câble. Le support 12 peut être réalisé en métal, par exemple en acier inoxydable, en mica ou en céramique.

Dans les autres cas, le support 12 peut être réalisé en matière plastique, telle qu'en polypropylène (PP) ou en polyéthylène (PE), ou encore en papier et le marquage 13 peut être réalisé par impression à jet d'encre.

Les figures 5 à 8 illustrent de manière schématique des étapes d'un procédé de traçabilité conforme à un mode de mise en oeuvre de l'invention.

Selon une première étape illustrée sur la figure 5, le support de marquage 12 est introduit dans un câble 10 au cours de la fabrication du câble.

A cet effet, les conducteurs 16 et le support de marquage 12 sont entrainés en défilement à travers une tête d'extrudeuse.

Le câble 10 est par exemple un câble électrique de communication comprenant une gaine tubulaire 11 et une pluralité de conducteurs en cuivre 16 s'étendant à l'intérieur de la gaine 11.

La gaine 11 du câble 10 est formée par extrusion d'une matière plastique autour des conducteurs 16 et du support de marquage 12, pendant le défilement des conducteurs 16 et du support de marquage 12. Le support de marquage 12 est positionné à l'intérieur du câble 10, entre la gaine 11 et le faisceau de conducteurs 16, en périphérie du faisceau de conducteurs 16. Le support de marquage 12 peut être positionné en long, parallèlement au faisceau de conducteurs 16, ou en hélice autour du faisceau de conducteurs 16. Dans le cas où le marquage itératif 13b correspond à un marquage métrique du support 12, le support de marquage 12 est de préférence positionné en long, parallèlement au faisceau de conducteurs 16.

Le câble 10 ainsi fabriqué est enroulé sur un touret 24 pour être stocké.

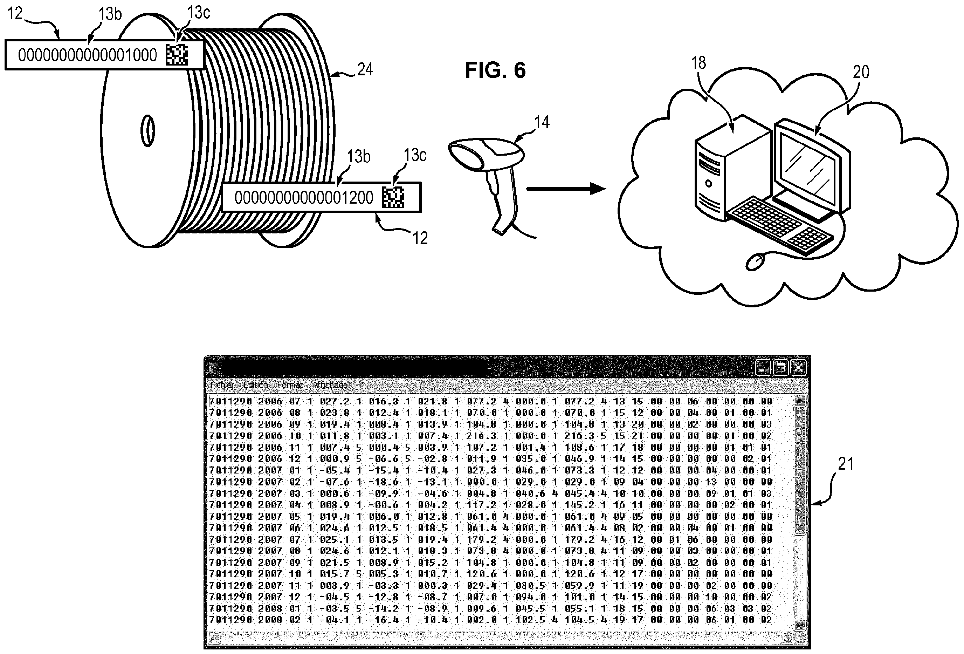

Selon une deuxième étape illustrée sur la figure 6, un opérateur relève les informations figurant sur le support de marquage 12 aux deux extrémités du câble.

L'opérateur utilise un lecteur optique 14 pour lire un code Datamatrix situé à la première extrémité du câble (extrémité située à l'intérieur de l'enroulement sur le touret) et un code Datamatrix situé à la deuxième extrémité du câble (extrémité située à l'extérieur de l'enroulement sur le touret). Le lecteur optique 14 est adapté pour convertir le code Datamatrix en données numériques et à transmettre ces données vers un serveur distant 20.

Le serveur distant 20 enregistre les données transmises par le lecteur optique 14 dans la base de données 18 qui est identifiée dans le code Datamatrix.

La base de données 18 contient un fichier de traçabilité 21 qui répertorie les portions de câble et les données associées transmises par le lecteur optique 14. Plus précisément, pour chaque portion de câble, le fichier de traçabilité 21 contient les données suivantes :
- un type du câble,
- un fabricant du câble,
- un numéro d'identification du lot du câble,
- un numéro d'identification du touret sur lequel est enroulé le câble,
- les codes alphanumériques correspondants aux codes Datamatrix lus par le lecteur optique aux extrémités de la portion de câble, et
- la date et l'heure de la lecture des données,

Cette deuxième étape est réalisée chez le fabricant de câble, juste après l'étape de fabrication du câble et avant le stockage du câble.

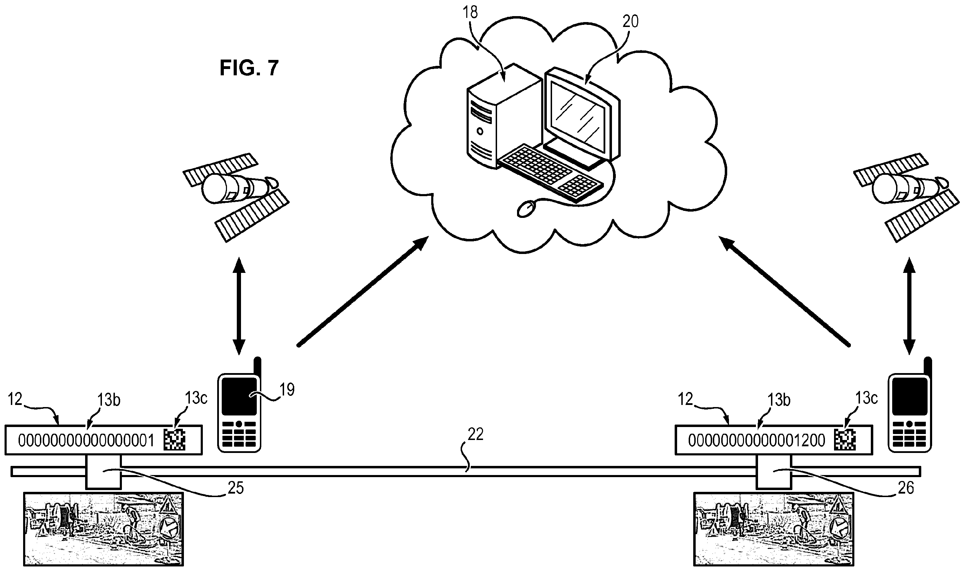

Selon une troisième étape illustrée sur la figure 7, lors de l'installation d'une portion de câble 22 dans un réseau de communication ou d'énergie, un opérateur relève les informations figurant sur le support de marquage 12 à l'aide d'un terminal mobile 19 à chacune des extrémités de la portion de câble 22. Sur la figure 7, la portion de câble 22 s'étend entre deux chambres d'intervention 25 et 26 (ou chambres de raccordement). L'opérateur relève les informations figurant sur le support de marquage 12 à l'aide d'un terminal mobile 19 dans la première chambre d'intervention 25 et dans la deuxième chambre d'intervention 26.

Le terminal mobile 19 comprend un dispositif de prise d'image, dispositif de localisation, tel qu'un récepteur GPS (Global Positioning System), permettant de localiser le terminal mobile 19, et un écran d'affichage.

De plus, le terminal mobile 19 est programmé avec une application spécifique adaptée pour lire les données 13c figurant sur le support de marquage 12, déterminer une position géographique du terminal mobile 19 et transmettre au serveur distant 20 les données 13c figurant sur le support de marquage 12 et la position géographique correspondante mesurée.

Ces données peuvent être transmises par le terminal mobile 19 au serveur distant 20 via un réseau de communication mobile, par exemple par le biais d'un message SMS (Short Message Services).

Plus précisément, l'application spécifique exécute des étapes de :
- commander le dispositif de prise d'image pour générer une image du code Datamatrix 13c figurant sur le support de marquage 12,
- extraire de l'image ainsi générée les données contenues dans le code Datamatrix, à savoir les données contenues dans la zone répétée du code datamatrix et les données contenues dans la zone itérative du code Datamatrix,
- commander le dispositif de localisation pour mesurer une position géographique du terminal mobile 19, et
- transmettre les données extraites de l'image et la position géographique au serveur distant 20.

Le serveur distant 20 est programmé pour exécuter des étapes de :
- comparer les informations extraites du code Datamatrix avec les informations contenues dans le fichier de traçabilité de la base de données, pour identifier la portion de câble concernée,
- enregistrer dans le fichier de traçabilité les données contenues dans le code Datamatrix et la position géographique associée, ces informations étant enregistrées en lien avec la portion de câble concernée.

Le fichier de traçabilité permet d'établir une cartographie des positions physiques d'affectation des portions de câbles dans le réseau de communication ou d'énergie.

Cette troisième étape peut être réalisée lors de l'installation des portions de câble dans le réseau ou lors d'une intervention de maintenance sur les portions de câble déjà installées.

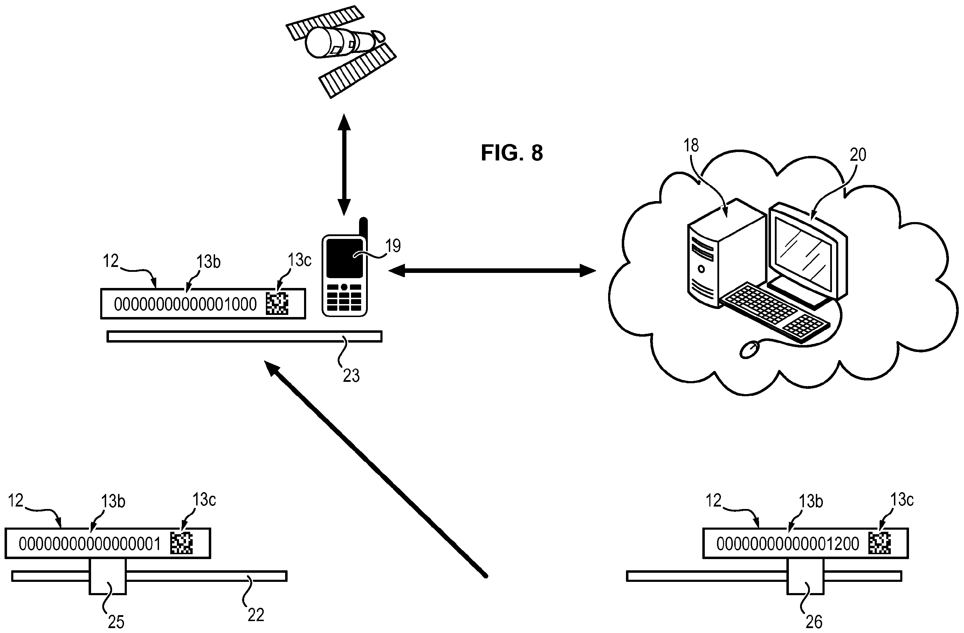

Selon une quatrième étape illustrée sur la figure 8, en cas de tronçonnage ou de déplacement d'une portion de câble 23 du câble 22, il est possible en interrogeant la base de données 18, de retrouver la position physique d'affectation d'origine dans le réseau de la portion de câble 23 dont le support de marquage 12 a été retrouvé.

A cet effet, un opérateur relève les informations figurant sur le support de marquage 12 à l'aide d'un terminal mobile 19.

Le terminal mobile 19 est programmé avec une application spécifique qui exécute des étapes de :
- commander le dispositif de prise d'image pour générer une image du code Datamatrix figurant sur le support de marquage,
- extraire de l'image ainsi générée les données contenues dans le code Datamatrix, à savoir les données contenues dans la zone répétée du code datamatrix et les données contenues dans la zone itérative du code Datamatrix,
- transmettre les données extraites de l'image au serveur distant 20 pour identification de la portion de câble 23.

Le serveur distant 20 est adapté pour exécuter des étapes de :
- comparer les données extraites du code Datamatrix avec les données enregistrées dans le fichier de traçabilité 21 de la base de données 18, et
- en fonction de cette comparaison, identifier la portion de câble concernée et la position géographique associée correspondant à la position physique d'affectation d'origine dans le réseau,
- transmettre au terminal mobile 19 des informations identifiant la portion de câble 23 ainsi que des informations concernant la position physique d'affectation d'origine dans le réseau.

L'application spécifique exécute alors l'étape de :
- recevoir les informations concernant la position physique d'affectation d'origine dans le réseau, et
- afficher sur l'écran du terminal les informations identifiant la portion de câble et les informations concernant la position physique d'affectation d'origine dans le réseau, afin que l'opérateur puisse en prendre connaissance.

## Revendications

1. Procédé de traçabilité de câbles de communication ou d'énergie,
**caractérisé en ce que** lors de la fabrication d'un câble, on introduit dans celui-ci un support de marquage (2 ; 12), ledit support (2 ; 12) portant, réparti régulièrement dans la longueur du câble, un marquage portant des informations dont une partie d'identification (3a) est répétée dans ladite longueur du câble et dont une autre partie itérative (3b, 3c ; 13b, 13c) est différente pour chaque zone de marquage et permet l'identification de ladite zone,
et **en ce que** lors d'une installation d'une portion de câble dans un réseau, on relève sur ce support des informations relatives à la partie itérative (3b, 3c ; 13b, 13c), ainsi que des informations relatives à la partie d'identification (3a) aux voisinages des extrémités de ladite portion et on mémorise ces informations (3a, 3b, 3c; 13b, 13c) dans une base de données (8 ; 18) répertoriant les différentes portions de câble du réseau en les associant à leur position physique dans celui-ci,
ladite base de données (8 ; 18) étant interrogée ultérieurement à partir des informations de marquage lues sur le support, pour retrouver la position physique d'affectation dans le réseau de la portion de câble.

2. Procédé selon la revendication 1, dans lequel la position physique d'affectation comprend des coordonnées géographiques de la portion de câble.

3. Procédé selon l'une des revendications 1 et 2, dans lequel le support (2, 12) est un support métallique sur lequel est gravé ou imprimé un marquage comportant une partie itérative et une partie d'identification.

4. Procédé selon l'une des revendications 1 et 2, dans lequel le support (2, 12) est en matériau non métallique sur lequel est gravé ou imprimé un marquage comportant une partie itérative et une partie d'identification.

5. Procédé selon l'une des revendications 1 à 4, dans lequel chaque zone de marquage est identifiée par une combinaison unique constituée de la partie itérative et de la partie d'identification, de sorte que chaque combinaison identifie de manière univoque une portion de câble.

6. Procédé selon l'une des revendications 1 à 5, dans lequel une partie du marquage est un code-barre (3c, 13c) adapté pour être lu par lecture optique, la lecture d'informations portées par le support se faisant au moyen d'un lecteur optique.

7. Procédé selon la revendication 6, dans lequel une partie (3c, 13c) du marquage est un code barre 2D, tel qu'un code datamatrix, ou de type QR Code.

8. Procédé selon l'une des revendications précédentes, dans lequel les marquages sont répartis dans la longueur du câble avec une périodicité de l'ordre de la dizaine de centimètres ou du mètre ou encore de quelques mètres.

9. Procédé selon l'une des revendications qui précèdent, dans lequel, lors de l'installation de la portion de câble dans le réseau, les informations de marquage figurant sur le support de marquage (12) sont relevées au moyen d'un dispositif de prise d'image et des coordonnées géographiques de la portion de câble sont relevées au moyen d'un dispositif de localisation, les coordonnées géographiques étant associées aux informations de marquage.

10. Procédé selon la revendication 9, dans lequel les informations de marquage relevées sur le support et les coordonnées géographiques associées sont transmises par un terminal mobile (19) vers la base de données (18) en vue de leur enregistrement,

11. Procédé selon l'une des revendications qui précèdent, dans lequel, pour retrouver la position physique d'affectation dans le réseau d'une portion de câble, les informations de marquage figurant sur le support de marquage (12) sont relevées au moyen d'un dispositif de prise d'image , les informations de marquage relevées sont comparées avec les informations de marquage enregistrées dans la base de données (18), et la position physique d'affectation dans le réseau de la portion de câble est déterminée en fonction de cette comparaison.

12. Procédé selon la revendication 11, dans lequel les informations de marquage relevées sur le support sont transmises par un terminal mobile (19) vers la base de données (18), le terminal mobile (19) recevant des données relatives à la position physique d'affectation dans le réseau de la portion de câble, et affichant les données reçues sur un écran du terminal mobile (19).

13. Application chargeable dans la mémoire d'un terminal programmable, l'application étant propre à commander le terminal pour que le terminal exécute automatiquement des étapes de :
- recevoir des données de marquage en provenance d'un lecteur optique, les données de marquage reçues étant représentative d'un marquage figurant sur un support de marquage d'un câble d'un réseau de communication ou d'énergie,
- commander un dispositif de localisation pour mesurer une position géographique du terminal mobile, et
- transmettre les données de marquage et la position géographique vers un serveur distant (20) pour enregistrement dans une base de données (18) répertoriant les différentes portions de câble du réseau en les associant à leur position physique dans celui-ci.

14. Câble pour réseau de communication ou d'énergie, **caractérisé en ce que**, pour la mise en oeuvre du procédé selon l'une des revendications 1 à 12, il intègre un support de marquage (2, 12), ledit support portant, réparti régulièrement dans la longueur du câble, un marquage portant des informations dont une partie (3a) est répétée dans ladite longueur du câble et dont une autre partie itérative (3b, 3c ; 13b, 13c) est différente pour chaque zone de marquage et permet l'identification de ladite zone.

15. Câble selon la revendication 14, dans lequel un support (2, 12) est un ruban métallique, tel qu'un ruban en acier inoxydable.

16. Câble selon la revendication 14, dans lequel ledit ruban (2, 12) est en matériau non métallique type mica, céramique, polymère ou papier.

17. Câble selon l'une des revendications 14 à 16, dans lequel le ruban (2, 12) est disposé dans le câble soit dans la gaine (1, 11) du câble, soit dans le faisceau de conducteurs (6, 16) ou en périphérie des conducteurs (6, 16).

## Patentansprüche

1. Rückverfolgungsverfahren von Kommunikations- oder Energiekabeln:
**dadurch gekennzeichnet, dass** bei der Herstellung eines Kabels in dasselbe ein Kennzeichnungsträger (2; 12) eingeführt wird, wobei der genannte Träger (2; 12) regelmäßig über die Länge des Kabels verteilt eine Kennzeichnung trägt, die Angaben trägt, von denen ein Identifizierungsteil (3a) in der genannten Länge des Kabels wiederholt wird und von denen ein anderer, iterativer Teil (3b, 3c; 13b, 13c) für jeden Kennzeichnungsteil unterschiedlich ist und die Identifizierung des genannten Bereichs zulässt;
und dass bei einer Installation eines Kabelabschnitts in einem Netz auf diesem Träger Angaben über den iterativen Teil (3b, 3c; 13b, 13c) sowie Angaben über den Identifizierungsteil (3a) in den Nachbarschaften der Enden des genannten Abschnitts abgelesen werden und diese Angaben (3a, 3b, 3c; 13b, 13c) in einer Datenbank (8; 18) gespeichert werden, die die unterschiedlichen Kabelabschnitte des Netzes aufführt, indem sie ihrer physischen Position in demselben zugeordnet werden,
wobei die genannte Datenbank (8; 18) später ausgehend von den auf dem Träger ausgelesenen Kennzeichnungsdaten abgefragt wird, um die physikalische Zuordnungsposition in dem Netz des Kabelabschnitts wiederzufinden.

2. Verfahren gemäß Anspruch 1, bei dem die physische Zuordnungsposition geografische Daten des Kabelabschnitts umfasst.

3. Verfahren gemäß einem der Ansprüche 1 und 2, bei dem der Träger (2, 12) ein Metallträger ist, auf dem eine Kennzeichnung graviert oder aufgedruckt ist, die einen iterativen Teil und einen Identifizierungsteil umfasst.

4. Verfahren gemäß einem der Ansprüche 1 und 2, bei dem der Träger (2, 12) aus nicht metallischem Material ist, auf dem eine Kennzeichnung graviert oder aufgedruckt ist, die einen iterativen Teil und einen Identifizierungsteil umfasst.

5. Verfahren gemäß einem der Ansprüche 1 bis 4, bei dem jeder Kennzeichnungsbereich durch eine aus dem iterativen Teil und dem Identifizierungsteil gebildete einzigartige Kombination derart identifiziert ist, dass jede Kombination einen Kabelabschnitt eindeutig identifiziert.

6. Verfahren gemäß einem der Ansprüche 1 bis 5, bei dem ein Teil der Kennzeichnung ein Strichcode (3c, 13c) ist, der geeignet ist, um per optischem Lesen ausgelesen zu werden, wobei das Lesen von auf dem Träger gespeicherten Angaben mittels eines optischen Lesegeräts erfolgt.

7. Verfahren gemäß Anspruch 6, bei dem ein Teil (3c, 13c) der Kennzeichnung ein Strichcode 2D, wie z. B. ein Datamatrix-Code oder vom Typ QR Code, ist.

8. Verfahren gemäß irgendeinem der voranstehenden Ansprüche, bei dem die Kennzeichnungen über die Länge des Kabels mit einer Periodizität in einer Größenordnung von rund zehn Zentimetern oder einem Meter oder auch von einigen Metern verteilt sind.

9. Verfahren gemäß einem der voranstehenden Ansprüche, bei dem bei der Installation des Kabelabschnitts in dem Netz die auf dem Kennzeichnungsträger (12) vorhandenen Kennzeichnungsangaben mittels einer Bilderfassungsvorrichtung erfasst werden und die geografischen Koordinaten des Kabelabschnitts mittels einer Lokalisierungsvorrichtung erfasst werden, wobei die geografischen Koordinaten den Kennzeichnungsangaben zugeordnet sind.

10. Verfahren gemäß Anspruch 9, bei dem die auf dem Träger erfassten Kennzeichnungsangaben und die zugeordneten geografischen Koordinaten durch ein mobiles Terminal (19) zu ihrer Abspeicherung auf die Datenbank (18) übertragen werden.

11. Verfahren gemäß irgendeinem der voranstehenden Ansprüche, bei dem zum Wiederfinden der physischen Zuordnungsposition in dem Netz eines Kabelabschnitts die auf dem Kennzeichnungsträger (12) vorhandenen Kennzeichnungsangaben mittels einer Bilderfassungsvorrichtung erfasst werden, wobei die erfassten Kennzeichnungsangaben mit den in der Datenbank (18) abgespeicherten Kennzeichnungsangaben verglichen werden und die physische Zuordnungsposition in dem Netz des Kabelabschnitts in Abhängigkeit von diesem Vergleich bestimmt wird.

12. Verfahren gemäß Anspruch 11, bei dem die auf dem Träger erfassten Kennzeichnungsangaben durch ein mobiles Terminal (19) auf die Datenbank (18) übertragen werden, wobei das mobile Terminal (19) Daten über die physische Zuordnungsposition in dem Netz des Kabelabschnitts empfängt und die empfangenen Daten auf einem Bildschirm des mobilen Terminals (19) anzeigt.

13. Ladungsfähige Anwendung in dem Speicher eines programmierbaren Terminals, wobei die Anwendung geeignet ist, das Terminal zu steuern, damit das Terminal automatisch die Schritte ausführt:
- Empfang der von einem optischen Lesegerät stammenden Kennzeichnungsdaten, wobei die empfangenen Kennzeichnungsdaten für eine Kennzeichnung repräsentativ sind, die auf einem Kennzeichnungsträger eines Kabels eines Kommunikations- oder Energienetzes vorhanden ist,
- Steuern einer Lokalisierungsvorrichtung zur Messung einer geografischen Position des mobilen Terminals und
- Übertragen der Kennzeichnungsdaten und der geografischen Position auf einen entfernten Server (20) zum Abspeichern in einer Datenbank (18), die die unterschiedlichen Kabelabschnitte des Netzes durch deren Zuordnung zu ihrer physischen Position in demselben erfassen.

14. Kabel für ein Kommunikations- oder Energienetz, **dadurch gekennzeichnet, dass** es für die Umsetzung des Verfahrens gemäß einem der Ansprüche 1 bis 12 einen Kennzeichnungsträger (2, 12) einschließt, wobei der genannte Träger regelmäßig über die Länge des Kabels verteilt eine Kennzeichnung trägt, die Angaben trägt, von denen ein Teil (3a) in der genannten Länge des Kabels wiederholt wird und von denen ein anderer, iterativer Teil (3b, 3c; 13b, 13c) für jeden Markierungsbereich unterschiedlich ist und die Identifizierung des genannten Bereichs zulässt.

15. Kabel gemäß Anspruch 14, bei dem ein Träger (2, 12) ein Metallband, wie z. B. ein Band aus rostfreiem Stahl, ist.

16. Kabel gemäß Anspruch 14, bei dem das genannte Band (2, 12) aus nicht metallischem Material vom Typ Mica, Keramik, Polymer oder Papier ist.

17. Kabel gemäß einem der Ansprüche 14 bis 16, bei dem das Band (2, 12) in dem Kabel entweder in dem Kanal (1, 11) des Kabels oder in dem Leiterbündel (6, 16) oder in der Peripherie der Leiter (6, 16) angeordnet ist.

## Claims

1. Method for tracing communication or power cables,
**characterised in that** during the manufacture of a cable, a marking support (2; 12) is inserted into the latter, said support (2; 12) bearing, regularly distributed lengthwise along the cable, a marking that bears information of which an identification portion (3a) is repeated in said length of the cable and of which another iterative portion (3b, 3c; 13b, 13c) is different for each marking zone and allows for the identification of said zone,
and **in that** during an installation of a portion of cable in a network, information concerning the iterative portion (3b, 3c; 13b, 13c) is read on this support, as well as information concerning the identification portion (3a) in the vicinities of the ends of said portion and this information (3a, 3b, 3c; 13b, 13c) is memorised in a database (8; 18) that lists the various portions of cable of the network by associating them with their physical position in the latter,
said database (8; 18) being queried later using marking information read on the support, in order to retrieve the physical assignment position in the network of the cable portion.

2. Method according to claim 1, wherein the physical assignment position comprises geographical coordinates of the cable portion.

3. Method according to one of claims 1 and 2, wherein the support (2, 12) is a metal support whereon a marking is etched or printed comprising an iterative portion and an identification portion.

4. Method according to one of claims 1 and 2, wherein the support (2, 12) is made of a non-metal material whereon a marking is etched or printed comprising an iterative portion and an identification portion.

5. Method according to one of claims 1 to 4, wherein each marking zone is identified by a unique combination comprised of the iterative portion and of the identification portion, in such a way that each combination unequivocally identifies a portion of cable.

6. Method according to one of claims 1 to 5, wherein a portion of the marking is a barcode (3c, 13c) suitable for being read via optical reading, with the reading of information carried by the support taking place by means of an optical reader.

7. Method according to claim 6, wherein a portion (3c, 13c) of the marking is a 2D barcode, such as a datamatrix code, or of the QR Code type.

8. Method according to one of the preceding claims, wherein the markings are distributed lengthwise along the cable with a periodicity of about ten centimetres or a metre or several metres.

9. Method according to one of the preceding claims, wherein, during the installation of the cable portion in the network, the marking information mentioned on the marking support (12) is read by means of a device for taking images and geographical coordinates of the cable portion are read by means of a device for locating, with the geographical coordinates being associated with the marking information.

10. Method according to claim 9, wherein the marking information read on the support and the associated geographical coordinates are transmitted by a mobile terminal (19) to the database (18) for the purpose of recording them.

11. Method according to one of the preceding claims, wherein, in order to retrieve the physical assignment position in the network of a portion of cable, the marking information mentioned on the marking support (12) is read by means of a device for taking images, the marking information read is compared with the marking information recorded in the database (18), and the physical assignment position in the network of the cable portion is determined according to this comparison.

12. Method according to claim 11, wherein the marking information read on the support is transmitted by a mobile terminal (19) to the database (18), with the mobile terminal (19) receiving data concerning the physical assignment position in the network of the cable portion, and displaying the data received on a screen of the mobile terminal (19).

13. Application that can be loaded into the memory of a programmable terminal, with the application able to control the terminal so that the terminal automatically executes the steps of:
- receiving marking data from an optical reader, with the marking data received representative of a marking mentioned on a marking support of a cable of a communication or power network,
- controlling a device for locating in order to measure a geographical position of the mobile terminal, and
- transmitting the marking data and the geographical position to a remote server (20) for recording in a database (18) listing the various portions of cable of the network by associating them with their physical position in the latter.

14. Cable for communication or power network, **characterised in that**, for the implementing of the method according to one of claims 1 to 12, it incorporates a marking support (2, 12), said support bearing, regularly distributed over the length of the cable, a marking bearing information of which a portion (3a) is repeated in said length of the cable and of which another iterative portion (3b, 3c; 13b, 13c) is different for each marking zone and allows for the identification of said zone.

15. Cable according to claim 14, wherein a support (2, 12) is a metal ribbon, such as a stainless steel ribbon.

16. Cable according to claim 14, wherein said ribbon (2, 12) is a non-metal material of the mica, ceramic, polymer or paper type.

17. Cable according to one of claims 14 to 16, wherein the ribbon (2, 12) is arranged in the cable either in the sheath (1, 11) of the cable, or in the bundle of conductors (6, 16) or at the periphery of the conductors (6, 16).
